# FASCICULE DE BREVET EUROPEEN

(11) **EP 3 687 471 B1**
(45) Date de publication et mention de la délivrance du brevet: **18.08.2021**
(21) Numéro de dépôt: 18782330.7
(22) Date de dépôt: 19.09.2018
(51) Int. Cl.: A61H 3/00, A61H 1/02, B25J 9/00

(54) **MEMBRE INFERIEUR D'EXOSQUELETTE A FAIBLE CONSOMMATION ENERGETIQUE**
UNTERE EXTREMITÄT EINES EXOSKELETTS MIT GERINGEM ENERGIEVERBRAUCH
LOWER LIMB OF AN EXOSKELETON WITH LOW POWER CONSUMPTION

(30) Priorité: 25.09.2017 FR 1758842
(43) Date de publication de la demande: 05.08.2020
(73) Titulaire: Commissariat à l'Energie Atomique et aux Energies Alternatives, 75015 Paris (FR)
(72) Inventeur: GEFFARD, Franck, 91400 Orsay (FR); PONSORT, Dominique, 91570 Bievres (FR)
(74) Mandataire: Prouvez, Julien
(86) Numéro de dépôt international: PCT/EP2018/075396
(87) Numéro de publication internationale: WO 2019/057797

(56) Documents cités:
- WO-A1-91/00755
- WO-A1-2017/121971
- WO-A2-2012/125765
- FR-A1- 2 920 951
- US-A- 406 328
- US-A1- 2005 059 908
- US-A1- 2013 023 803

## Description

### DOMAINE DE L'INVENTION

L'invention concerne le domaine des exosquelettes et plus particulièrement les membres inférieurs d'exosquelette ambulatoire.

### ARRIERE PLAN DE L'INVENTION

Classiquement, un membre inférieur d'exosquelette ambulatoire comprend un segment de bassin sur lequel est articulée, autour d'une hanche, une première extrémité d'un segment de jambe et un segment de pied articulé au moyen d'une cheville à une deuxième extrémité du segment de jambe. Le contrôle du membre inférieur nécessite au moins un actionneur pour commander la flexion du segment de jambe lors de la marche et reprendre les efforts appliqués à l'exosquelette. Les efforts appliqués à l'exosquelette peuvent avoir plusieurs origines : une charge appliquée à l'exosquelette (exosquelette de port de charge), une suppléance partielle des mouvements de l'utilisateur (exosquelette de rééducation) ainsi que, généralement, l'essentiel du poids propre de l'exosquelette.

L'actionneur de jambe reprenant à lui seul l'ensemble de la charge, il consomme beaucoup d'énergie, y compris dans des phases statiques. L'exosquelette doit donc comprendre des moyens de stockage d'énergie (hydraulique, thermique ou électrique) dimensionnés en conséquence qui impactent le poids de l'exosquelette ainsi que son autonomie et son inertie. Enfin, en cas de défaut dans l'alimentation en énergie, l'ensemble de la masse de l'exosquelette ainsi que sa charge éventuelle vient reposer sur l'utilisateur, ce qui peut être dangereux pour celui-ci.

Le document WO2012/125765 décrit un membre inférieur d'exosquelette ambulatoire tel que décrit dans le préambule de la revendication 1.

### OBJET DE L'INVENTION

Un objet de l'invention est de réduire la consommation énergétique d'un exosquelette ambulatoire, et d'accroître la sécurité en cas de coupure d'alimentation ou autre problème logiciel ou matériel.

### RESUME DE L'INVENTION

A cet effet, on prévoit un membre inférieur d'exosquelette ambulatoire comprenant au moins un segment de bassin, un segment de jambe et un segment de pied, le segment de jambe étant articulé en sa première extrémité sur le segment de bassin et en sa deuxième extrémité sur le segment de pied, dans lequel le segment de jambe comprend un élément ressort pour exercer un effort qui s'oppose à un rapprochement des extrémités du segment de jambe et des moyens de variation de la distance séparant les extrémités du segment de jambe pour appliquer un effort opposé à celui de l'élément ressort, les moyens de variation de ladite distance étant portés par le segment de bassin. Les moyens de variation de la distance comprennent également un dispositif de précontrainte de l'élément ressort.

L'élément ressort reprend les efforts verticaux appliqués à l'exosquelette sans consommation d'énergie, particulièrement en phase statique lorsque le dispositif de précontrainte permet, sans consommation d'énergie, de maintenir une tension dans l'élément ressort. La variation de la distance séparant les extrémités du segment de jambe permet à l'utilisateur de marcher avec un tel exosquelette sans que l'élément ressort n'applique d'effort sur le pied de l'utilisateur lors des phases de vol du pied.

L'invention permet donc le port d'une charge de masse inconnue sans requérir de paramétrer le membre inférieur, tant que cette masse est inférieure à l'effort de précontrainte.

Une réalisation particulièrement simple est obtenue lorsque les moyens de variation de la distance séparant les extrémités du segment de jambe comprennent un câble, qui pourra avantageusement s'étendre entre le segment de bassin et le segment de pied. La réalisation est encore simplifiée lorsque l'élément ressort est une lame, la lame pouvant remplir la double fonction d'élément ressort et de pièce de structure. La lame ressort peut être positionnée derrière ou devant la jambe d'un utilisateur lorsqu'il porte l'exosquelette.

Avantageusement, les moyens de variation de la distance séparant les extrémités du segment de jambe comprennent un motoréducteur et une poulie enrouleuse pour enrouler et dérouler le câble.

Selon un mode de réalisation particulier, les moyens de variation de la distance séparant les extrémités du segment de jambe sont pilotés par un capteur de position de pied situé sur le segment de pied de l'exosquelette. Selon une alternative avantageuse, le capteur d'intention de marche est situé sur l'articulation cheville se trouvant entre le segment jambe et le segment pied.

La variation de distance séparant les extrémités du segment de jambe peut alors être directement asservie sur la mesure issue de ce capteur, assurant ainsi le suivi du pied de la jambe en vol de l'utilisateur.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées parmi lesquelles :
- la figure 1 est une vue schématique de profil d'un utilisateur portant un premier mode de réalisation du membre inférieur d'exosquelette selon l'invention ;
- la figure 2 est une vue schématique de détail en perspective de l'exosquelette selon l'invention ;
- la figure 3 est une vue schématique de détail en perspective du premier mode de réalisation de l'exosquelette selon l'invention ;
- la figure 4 est une vue schématique de profil d'un utilisateur portant un deuxième mode de réalisation du membre inférieur d'exosquelette selon l'invention ;
- la figure 5 est une vue schématique en perspective d'un utilisateur portant un troisième mode de réalisation du membre inférieur d'exosquelette selon l'invention ;
- la figure 6 est une vue schématique en perspective d'un utilisateur portant un quatrième mode de réalisation du membre inférieur d'exosquelette selon l'invention ;
- la figure 7 est une vue schématique en perspective de détail du quatrième mode de réalisation de l'invention;
- la figure 8 est une vue schématique de profil d'un utilisateur portant un cinquième mode de réalisation du membre inférieur d'exosquelette selon l'invention ;
- la figure 9 est une vue schématique de profil d'un utilisateur portant un sixième mode de réalisation du membre inférieur d'exosquelette selon l'invention ;
- la figure 10 est une vue schématique de détail d'un septième mode de réalisation de l'exosquelette selon l'invention ;
- la figure 11 est une vue schématique de détail de la figure 10.

### DESCRIPTION DETAILLEE DE L'INVENTION

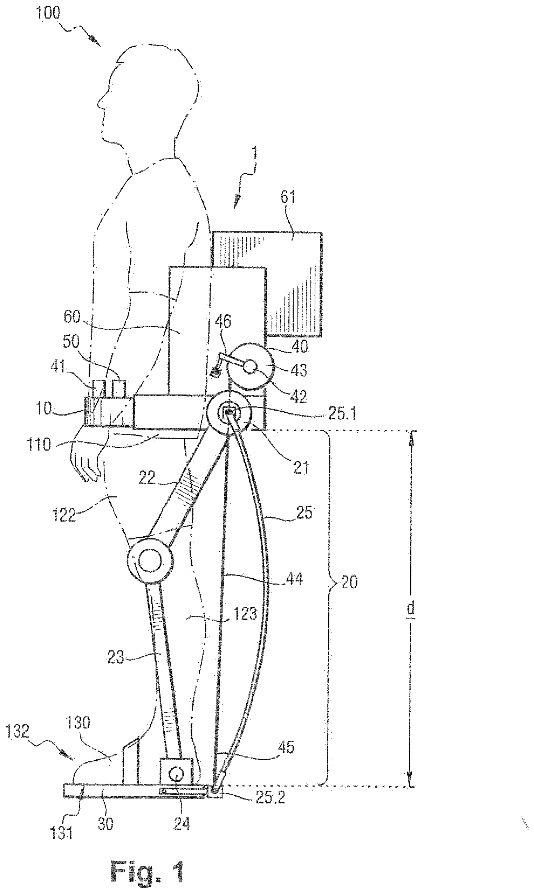

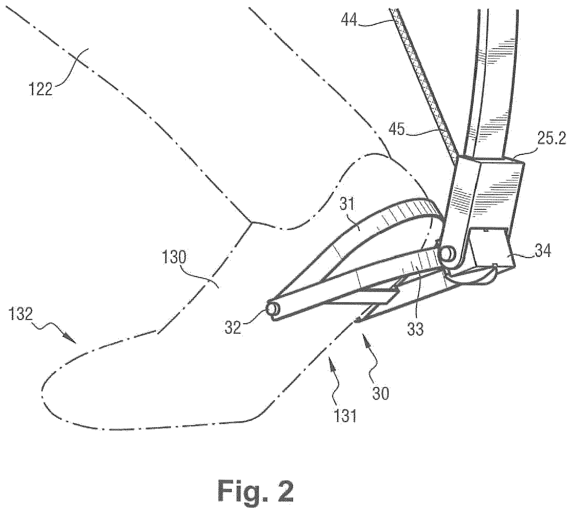

En référence aux figures 1 et 2, le membre inférieur d'exosquelette ambulatoire, généralement désigné 1, est porté par un utilisateur 100. Le membre inférieur 1 comprend un segment de bassin 10 sur lequel est articulé la première extrémité 21 d'un segment de jambe 20 comprenant un segment de cuisse 22 articulé sur un segment de tibia 23 et un segment de pied 30. Le segment de pied 30 est articulé sur le segment de tibia 22 en une deuxième extrémité 24 du segment de jambe 20. Le segment de bassin 10 et le segment de pied 30 sont respectivement reliés au bassin 110 et au pied 130 de l'utilisateur 100 par des sangles. Optionnellement, les segments de cuisse 22 et de tibia 23 peuvent être respectivement reliés à la cuisse 122 et au tibia 123 de la jambe 120 de l'utilisateur 100 par des sangles.

Le segment de jambe 20 comprend une lame ressort 25 qui s'étend en arrière du segment de jambe 20 et dont une première extrémité 25.1 est articulée sur le segment de bassin 10 et une deuxième extrémité 25.2 est articulée sur le segment de pied 30. Le segment de bassin 10 porte un motoréducteur 40 électrique alimenté par des accumulateurs 41 et dont l'arbre de sortie 42 porte une poulie enrouleuse 43. Un câble 44 s'étend entre le segment de pied 30 et la poulie enrouleuse 43. Plus précisément, une première extrémité 45 du câble 44 est reliée à la deuxième extrémité 25.2 de la lame ressort 25.

Comme visible en figure 2, le segment de pied 30 est confondu ici avec la semelle 131 de la chaussure 132 de l'utilisateur 100 et comprend un premier élément 31 de segment de pied 30 solidaire du pied 130 de l'utilisateur et qui est articulé par une articulation 32 sur un deuxième élément 33 de segment de pied 30. Le deuxième élément 33 est sensiblement en forme de fer à cheval et s'étend autour du talon de l'utilisateur. Le deuxième élément 33 est lui-même articulé sur l'extrémité 25.2 de la lame ressort 25. Un codeur 34 rotatif -ici un potentiomètre rotatif- mesure la position angulaire relative du deuxième élément 33 de segment de pied 30 et de la lame ressort 25. De cette position angulaire peut être déduite l'attitude (estimation de la longueur) de la jambe 122 et donc la distance séparant le segment de bassin 10 du segment de pied 30. Un asservissement de la distance d sur cette position angulaire permet de réaliser un suivi du pied de l'utilisateur 100 lorsque la jambe 122 est en phase de vol (décollée du sol).

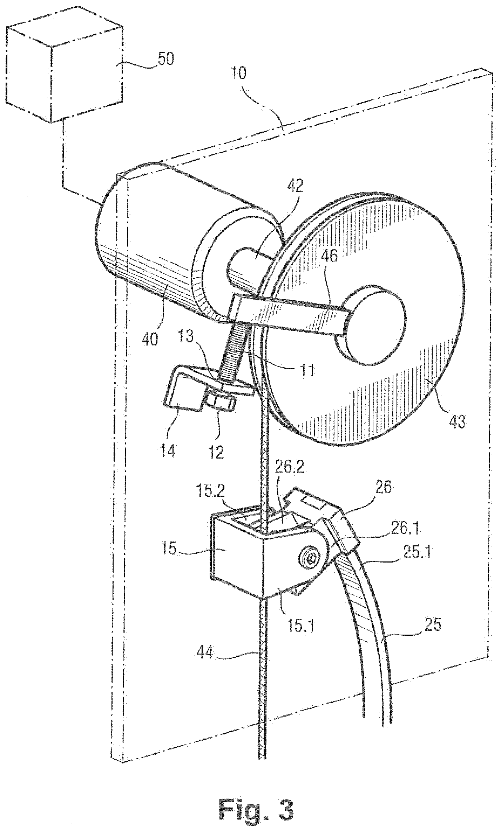

En référence à la figure 3, la poulie 43 comprend une butée 46 pour venir contre l'extrémité 11 d'une vis 12 engagée dans un filetage 13 réalisé dans une équerre 14 solidaire du segment de bassin 10.

Le motoréducteur 40 est relié à une unité 50 de contrôle et de commande portée par le segment de bassin 10. Comme visible en figure 1, le câble 44 est compris dans un plan comprenant l'axe d'articulation du segment de jambe 21 sur le segment de bassin 10 afin de ne pas créer de couple parasite sur le segment de hanche 10. Néanmoins, il peut être intéressant de faire passer le câble à l'arrière du point de rotation de la hanche si l'on veut créer un couple de rappel du dos (notamment pour assister la flexion du dos de l'utilisateur et donc protéger ses lombaires). Il est possible d'éliminer totalement les couples parasites en abduction en faisant passer le câble 44 par le centre de rotation de l'articulation du segment de jambe 20 sur le segment de bassin 10. Une telle réalisation est représentée sur la figure 3. La première extrémité 25.1 de la lame ressort 25 comprend une première chape 26 comportant deux premières oreilles 26.1 et 26.2 qui coopèrent à rotation respectivement avec deux deuxièmes oreilles 15.1 et 15.2 d'une deuxième chape 15 solidaire du segment de bassin 10. Les premières oreilles 26.1 et 26.2 viennent en appui contre des faces intérieures des deuxièmes oreilles 15.1 et 15.2 et le câble 44 s'étend entre les deux premières chapes 26.1 et 26.2.

Le segment de bassin 10 comprend une interface 60 pour le port d'une charge 61 utile.

En fonctionnement et préalablement à l'installation de l'exosquelette 1 sur l'utilisateur 100, on règle la butée 46 et/ou la longueur du câble 44 de manière à ce que la distance d séparant le segment de bassin 10 du segment de pied 30 soit sensiblement égale à la distance séparant le bassin 110 du pied 130 de l'utilisateur 100. La lame 25 est alors précontrainte y compris en l'absence de couple exercé par le motoréducteur 40 sur la poulie 43. Une fois l'exosquelette 1 lié à l'utilisateur 100, on fixe une charge 61 sur l'interface 60. La lame 25 est dimensionnée de manière à ne pas fléchir sous le poids de l'exosquelette 1 additionné du poids de la charge 61. Selon les caractéristiques de la lame 25 (matériau, section), la charge supportée par l'utilisateur 100- et reprise ici par sa jambe 120- peut varier de 0 % (assistance totale) à 100 % (pas d'assistance) de la charge totale qui comprend le poids propre P_{E} de l'exosquelette 1 et le poids de la charge 61.

En station debout, la lame 25 reprend des efforts verticaux auxquels est soumis l'exosquelette 1. Une quantité minime d'énergie est consommée par l'exosquelette 1 dans cette configuration car, la poulie 43 étant sur sa butée, le motoréducteur 40 ne fournit pas de couple et consomme peu d'énergie (voire pas du tout). Lorsque l'utilisateur 100 souhaite marcher, il transfère une partie de la charge exercée sur son pied 130 vers son autre pied et commence à lever son talon.

Le codeur 34 mesure un changement dans la position relative angulaire du pied de l'exosquelette par rapport à la lame 25 et transmet cette information à l'unité de commande 50. L'unité 50 analyse cette mesure et commande alors une rotation du motoréducteur 40 qui agit sur le câble 44 pour adapter la longueur de câble déployé au déplacement du segment de pied 30. Ainsi, l'unité de commande 50 asservit la distance d sur la mesure de l'attitude de la jambe 122 et assure une variation de la distance d pendant que la jambe 120 de l'utilisateur est en vol (décollée du sol). Par exemple, la consigne de couple peut correspondre à un effort de traction d'environ trois cents Newtons appliqué par le motoréducteur 40 sur le câble 44 et qui correspond à une tension de la lame ressort 25 permettant de porter le poids de l'exosquelette et une charge additionnelle de vingt kilogrammes lorsque la jambe 22 de l'exosquelette 1 est décollée. Lors de la phase de vol du pied 130 de l'utilisateur, l'unité de commande 50 réalise l'asservissement de la distance d en fonction de la position du pied 130 de l'utilisateur 100 de manière à ce qu'aucun effort ne soit appliqué par la lame ressort 25 sur le pied 130 de l'utilisateur 100 lors de son mouvement demeure inférieur.

On obtient ainsi un membre inférieur 1 d'exosquelette qui consomme une quantité infime voire nulle d'énergie en station debout et dont la consommation énergétique en situation de marche est réduite car le motoréducteur 40 consomme de l'énergie exclusivement lorsque la jambe 120 n'est pas tendue (c'est-à-dire sur seulement une partie de la phase de la marche au cours de laquelle la jambe 120 est en l'air).

Les éléments identiques ou analogues à ceux précédemment décrits porteront une référence numérique identique dans la description qui suit des deuxième, troisième, quatrième et cinquième modes de réalisation de l'invention.

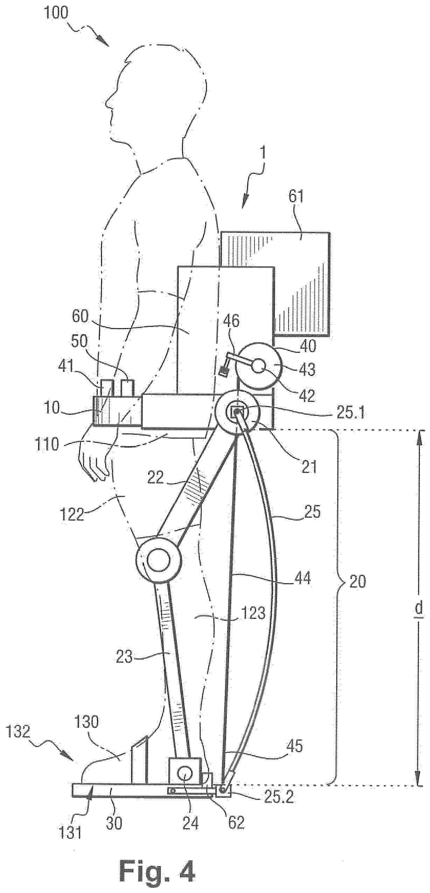

En référence à la figure 4 et selon un deuxième mode de réalisation de l'invention, le segment de pied 30 comprend un capteur potentiométrique linéaire 62 de haute sensibilité sur le segment de pied 30 de l'exosquelette 1 et relié à l'unité 50.

Ce capteur 62 mesure la distance qui sépare le premier élément 31 du deuxième élément 32 de segment de pied 30. De cette distance peut être déduite l'attitude (position angulaire et longueur) de la jambe 122 et donc la distance séparant le segment de bassin 10 du segment de pied 30. La détection de l'intention de l'utilisateur 100 de quitter la phase debout pour marcher s'effectue lorsque le capteur 62 mesure un mouvement. Cette mesure est transmise à l'unité 50 qui pilote alors le motoréducteur 40.

Ce capteur 62 peut également être constitué de jauges de contraintes de façon à mesurer l'effort entre le pied 30 et la cheville 25.2 (la distance d est alors asservie sur l'effort mesuré, avec une consigne nulle ou avec un léger offset).

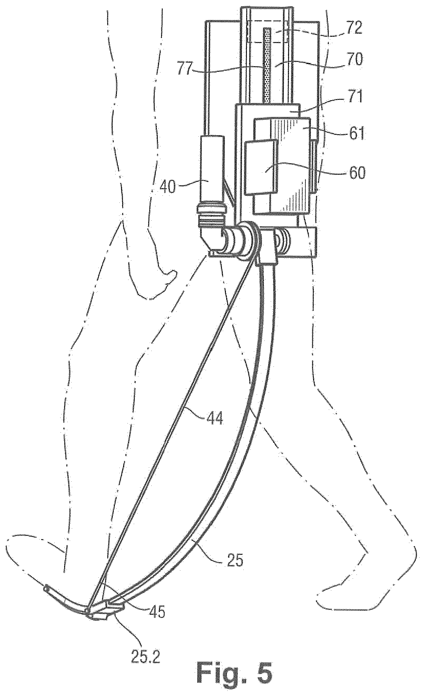

En référence à la figure 5 et selon un troisième mode de réalisation de l'invention, le segment de bassin 10 comprend une glissière 70 à billes orientée sensiblement verticalement lorsque l'exosquelette 1 repose sur un sol horizontal. Un premier chariot 71 est monté libre, ou avec un ressort de compensation de poids, en coulissement sur la glissière 70. Le premier chariot 71 porte l'interface 60 à laquelle est reliée la charge 61 ainsi que le motoréducteur 40, la poulie 43, sa butée 46, la vis 12 et l'équerre 14. D'autres éléments du segment de bassin 10 peuvent être également portés par le premier chariot 71 comme par exemple l'unité 50 de contrôle et de commande et/ou les accumulateurs électriques 41.

Le fonctionnement de l'exosquelette 1 est identique à ce qui a été précédemment décrit. L'implantation du motoréducteur 40 et de l'interface 60 de port de la charge 61 autorise une course libre de fléchissement des jambes (permettant par exemple de s'accroupir) libre au cours de laquelle il n'est pas nécessaire d'intervenir sur le motoréducteur 40, ce qui permet de limiter encore la consommation d'énergie de l'exosquelette 1. Ceci peut s'avérer particulièrement utile dans le cas d'exosquelette d'assistance appliqués à des tâches qui requièrent des fléchissements courts et fréquents des jambes comme par exemple pour la collecte d'éléments au sol (ordures, récoltes) ou le ratissage.

Une butée supérieure 72 peut également être prévue afin de limiter la course de fléchissement, cette course peut également être gérée à l'aide du codeur 34 et de l'unité de commande 50.

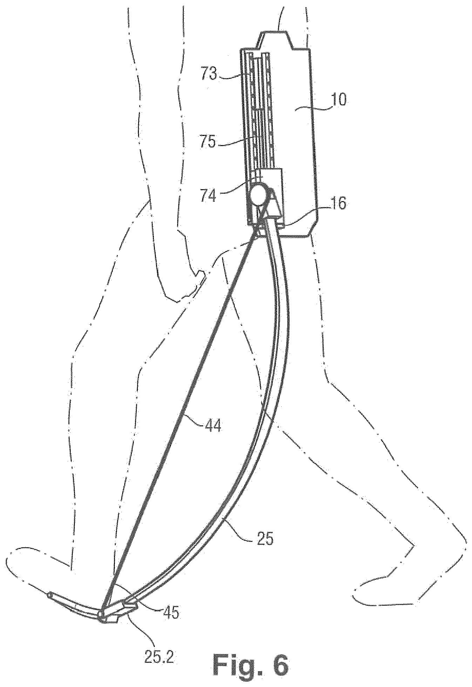

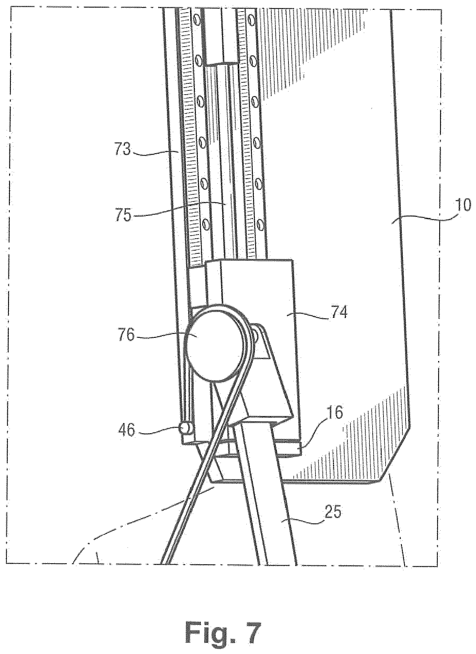

En référence aux figures 6 et 7 et selon un quatrième mode de réalisation de l'invention, le segment de bassin 10 comprend une glissière 73 à billes orientée sensiblement verticalement lorsque l'exosquelette repose sur un sol horizontal. Un deuxième chariot 74 est monté à coulissement sur la glissière 73. Un vérin 75 électrique, relié électroniquement à l'unité 50, s'étend entre le segment de bassin 10 et le deuxième chariot 74 de manière à ce qu'une rétraction du vérin 75 provoque une translation du deuxième chariot 74 qui éloigne celui-ci de la première extrémité 21 du segment de jambe 20 qui est articulée sur le segment de bassin 10. Comme visible en figure 6, la première extrémité 45 du câble 44 est reliée à la deuxième extrémité 25.2 de la lame ressort 25 et, comme visible en figure 7, la deuxième extrémité 46 du câble 44 est attelée au segment de bassin 10 -ici à un point de la glissière 73. Le deuxième chariot 74 porte une poulie folle 76 autour de laquelle s'enroule le câble 44. Ainsi un déplacement du deuxième chariot 74 permet d'agir sur la longueur déployée de câble 44 et donc sur la distance d séparant le segment de bassin 10 du segment de pied 30. Comme visible sur la figure 7, une butée basse 16 fixée sur le bassin 10 permet de limiter la course du deuxième chariot 74 vers le bas, et limiter ainsi la longueur maximale de la distance d, tout en plaçant le vérin 75 en position de repos (aucun effort repris par le vérin 75 et donc aucune consommation énergétique) .

Lorsque l'utilisateur 100 souhaite marcher, il transfère une partie de la charge exercée sur son pied 130 vers son autre pied et commence à lever son talon.

Le codeur 34 mesure un changement dans la position relative angulaire du pied de l'exosquelette par rapport à la lame 25 et transmet cette information à l'unité de commande 50. L'unité 50 analyse cette mesure et commande alors une rétraction du vérin 75 qui, en déplaçant le deuxième chariot 74, tire sur le câble 44 pour adapter la longueur de câble 44 déployé au déplacement du segment de pied 30. Ainsi, l'unité de commande 50 asservit la distance (d) sur la mesure de l'attitude de la jambe 122 et assure une variation de la distance d pendant qu'elle est en vol (décollée du sol).

Les troisièmes et quatrièmes modes de réalisation peuvent être combinés ensemble et le premier chariot 71 monté libre peut recevoir le deuxième chariot 74 commandé.

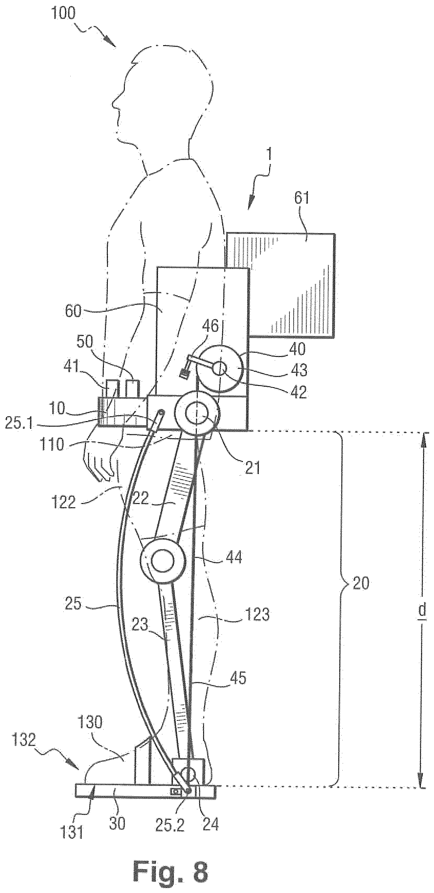

La figure 8 représente un cinquième mode de réalisation dans lequel la lame 25 est positionnée devant la jambe 22 de l'exosquelette 1. La courbure de la lame 25 est, ici orientée vers l'avant, mais elle peut également être orientée vers l'arrière.

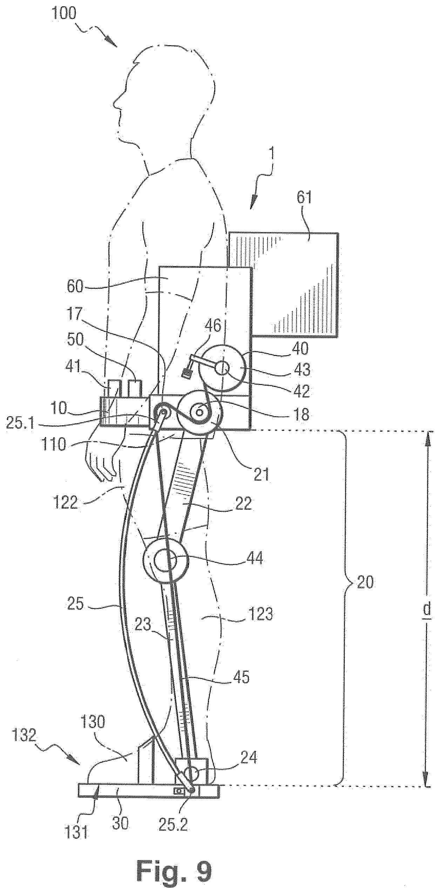

Dans un sixième mode de réalisation particulier représenté en figure 9, le câble 44 s'enroule sur une portion supérieure d'une première poulie folle de renvoi 17 pour ensuite s'enrouler sur une portion inférieure d'une deuxième poulie folle de renvoi 18. Le câble 44 vient ensuite s'enrouler autour de la poulie enrouleuse 43. Les première et deuxième poulies folles de renvoi 17 et 18 permettent de déplacer le point de traction du câble 44 sur le segment de bassin 10 de manière à contrôler le couple provoqué par la traction du câble 44 sur le segment de bassin 10 et sur l'utilisateur 100. Les première et deuxième poulies folles de renvoi 17 et 18 pourront également être montées élastiquement de manière à créer un rattrapage automatique de mou du câble 44 à la manière d'un galet tendeur préchargé. Ce type de dispositif est particulièrement utile dans les situations où l'utilisateur 100 souhaite s'accroupir et comprime la lame ressort 25, provoquant une détente du câble 44 qu'il est nécessaire de compenser.

Le rattrapage de mou de câble peut également être réalisé de manière électromécanique, par exemple à l'aide d'un capteur 47 de couple (non représenté) positionné sur la sortie du motoréducteur 40. Le capteur 47 est relié à l'unité de commande 50 qui commande le motoréducteur 40 de manière à ce que celui-ci applique un couple minimum Cmin à la poulie enrouleuse 43 et ainsi assure une tension minimale Tmin au câble 44. Ainsi, lorsque l'utilisateur 100 souhaite s'accroupir, il exerce, à l'aide de son poids propre, une pression sur la lame ressort 25, ce qui a pour effet de réduire la distance d et donc la tension dans le câble 44, le couple exercé sur l'arbre de sortie 42 du motoréducteur 43 chute et l'unité de commande 50 commande une rotation du motoréducteur 40 pour enrouler le câble 44 jusqu'à ce que le couple appliqué sur la poulie de sortie 43 par le motoréducteur 40 atteigne la valeur de couple minimal Cmin, établissant alors la tension du câble 44 à la valeur Tmin, évitant un mou du câble 44.

Dans le troisième mode de réalisation de l'invention, le dispositif de rattrapage de mou de câble comprend un capteur de déplacement 77 (ici un capteur potentiométrique) du chariot 71 relié à l'unité de commande 50 qui commande alors une rotation du motoréducteur 40 pour enrouler le câble 44, l'amplitude de la rotation du motoréducteur 40 étant fonction du déplacement du chariot 71 mesuré par le capteur de déplacement 77. La mesure du déplacement du chariot 71 permet de discriminer l'intention de l'utilisateur 100 de s'accroupir.

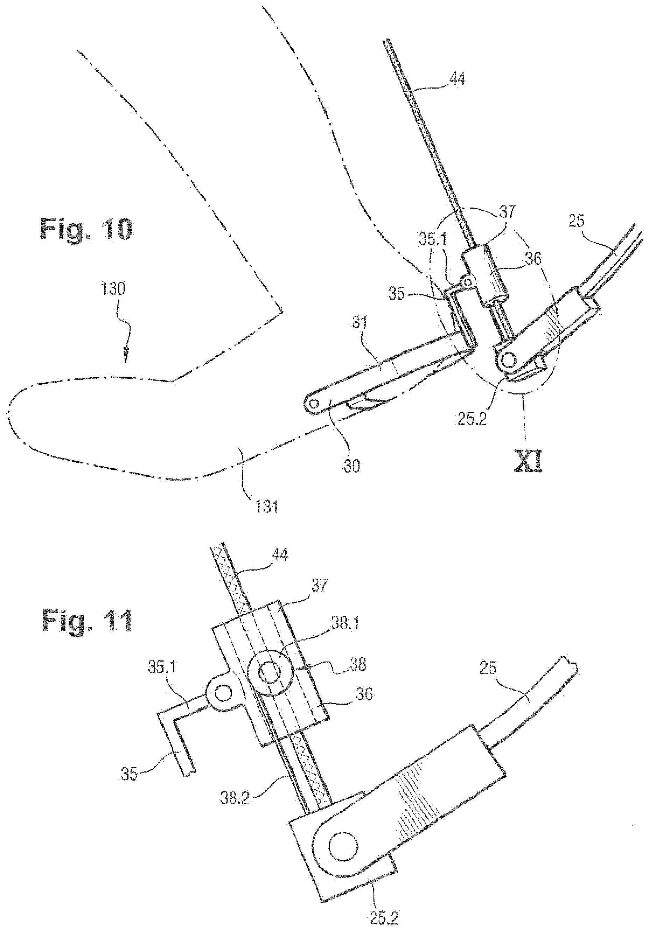

Selon un septième mode de réalisation de l'invention et en référence à la figure 10, le segment de pied 30 est confondu ici avec la semelle 131 de la chaussure 132 de l'utilisateur 100 et comprend un premier élément 31 de segment de pied 30 solidaire du pied 130 de l'utilisateur sensiblement en forme de fer à cheval et s'étend autour du talon de la chaussure 132. Le premier élément 31 comprend une potence 35 dont l'extrémité distale 35.1 est reliée par une articulation 36 à un coulisseau cylindrique 37 au travers duquel passe le câble 44. Le coulisseau 37 comprend un potentiomètre rotatif 38 résistif dont le rotor 38.1 est pourvu de moyens élastiques de rappel en sa position initiale qui correspond à une résistance mesurée à ses bornes égale à zéro. Un fil 38.2 relie la deuxième extrémité 25.2 de la lame ressort 25 au rotor 38.1. Le potentiomètre rotatif 38 est relié à l'unité de commande 50. En fonction de la résistance mesurée aux bornes du potentiomètre rotatif 38, l'unité de commande 50 estime la position angulaire relative du premier élément 31 de segment de pied 30 et de la lame ressort 25. De cette position angulaire peut être déduite l'attitude (estimation de la longueur) de la jambe 122 et donc la distance séparant le segment de bassin 10 du segment de pied 30. Un asservissement de la distance d sur cette position angulaire permet de réaliser un suivi du pied de l'utilisateur 100 lorsque la jambe 122 est en phase de vol (décollée du sol).

Bien entendu, l'invention n'est pas limitée aux modes de réalisation décrits mais englobe toute variante entrant dans le champ de l'invention telle que définie par les revendications.

En particulier,
- bien qu'ici l'exosquelette ne comporte qu'un seul membre inférieur, l'invention s'applique également à un exosquelette pourvu de deux membres inférieurs ;
- bien qu'ici le segment de bassin, de cuisse, de tibia et de pied soient reliés à l'utilisateur par des sangles, l'invention s'applique également à d'autres moyens de solidariser les segments de l'exosquelette à l'utilisateur, comme par exemple des éléments cylindriques rigides ou des vêtements spécifiques solidaires des segments de l'exosquelette;
- bien qu'ici le segment de cuisse et de tibia soient liés à l'utilisateur, l'invention s'applique également à des segments de cuisse ou de tibia indépendants de l'utilisateur ;
- bien qu'ici le segment de jambe comprenne un segment de cuisse articulé sur un segment de de tibia, l'invention s'applique également à un segment de jambe dépourvu de segment de cuisse et de tibia et qui comprendrait seulement la lame ressort et le câble (la lame servant alors de pièce structurelle) ;
- bien qu'ici le segment de jambe comprenne une lame ressort, l'invention s'applique également à d'autres types d'éléments ressorts comme par exemple un empilement de rondelles Belleville, un élément en élastomère, un ressort à gaz, un ressort à spires (par exemple sur le genou), un ressort en volutes, une structure à parallélogramme déformable ou encore un mouflage de câbles élastiques ;
- bien qu'ici le membre inférieur comprenne un motoréducteur et une poulie effectuant la traction sur un câble, l'invention s'applique également à d'autres moyens de variation de la distance séparant les extrémités du segment de jambe comme par exemple un mouflage déplacé par une vis à billes ou une crémaillère ;
- bien qu'ici, un vérin électrique provoque la translation du chariot relativement au segment de bassin, l'invention s'applique également à d'autres types d'actionneurs de déplacement du chariot relativement au segment de bassin, comme par exemple un assemblage vis/écrou dont un des composants est motorisé, un entrainement par courroie crantée, un motoréducteur solidaire du chariot et dont l'arbre de sortie engrène avec une crémaillère solidaire de la glissière ;
- bien qu'ici le câble soit relié au segment de pied, l'invention s'applique également à d'autres points de liaison du câble à l'exosquelette qui sont à même de provoquer une variation de la distance séparant les extrémités du segment de jambe comme par exemple une liaison sur la cheville , le segment de tibia ou le segment de cuisse ;
- bien qu'ici le système d'actionnement soit fixé au segment de bassin, l'invention s'applique également à d'autres points de fixation du système d'actionnement qui sont à même de provoquer une variation de la distance séparant les extrémités du segment de jambe comme par exemple une fixation sur la hanche, le haut de la jambe, le segment de tibia ou le segment de cuisse ;
- bien qu'ici la poulie comprenne une butée coopérant avec un écrou, l'invention s'applique également à d'autres dispositifs de précontrainte de l'élément ressort, et à d'autres emplacements sur la chaîne d'actionnement;
- bien qu'ici le segment de pied comprenne un capteur potentiométrique linéaire ou rotatif, sur le pied ou la cheville, l'invention s'applique également à d'autres types de capteur d'intention de marche comme par exemple un capteur de pression, un capteur de force ou un capteur rotoïde lié à une articulation du segment de cheville, voire également des systèmes de mesure sans contact (ex. : capteur optique, magnétique, ...) ;
- bien qu'ici la lame ressort soit positionnée à l'arrière de la jambe de l'utilisateur, l'invention s'applique également à d'autres implantations de la lame ressort comme par exemple une lame ressort positionnée à l'avant de la jambe de l'utilisateur (courbure vers l'avant), ou sur le côté extérieur des jambes de l'utilisateur ;
- bien qu'ici le motoréducteur comprenne une poulie d'enroulement d'un câble, l'invention s'applique également à d'autres types de moyens de faire varier la distance séparant les extrémités du segment de jambe, comme par exemple une roue coopérant avec un élément de transmission d'efforts souple comme par exemple une courroie crantée ou une chaîne. ;
- bien qu'ici l'articulation du segment de jambe sur le segment de bassin comprenne deux premières oreilles d'une chape solidaire de la lame ressort qui coopèrent à rotation avec deux deuxièmes oreilles d'une chape solidaire du segment de bassin, l'invention s'applique également à d'autres moyens d'articulation du segment de jambe sur le segment de bassin permettant de faire passer le câble par le centre de l'articulation, comme par exemple un axe perforé ;
- bien qu'ici le bassin, les moteurs, les batteries et le contrôleur soient dans le dos de l'utilisateur, l'invention s'applique au cas où l'exosquelette serait porté à l'envers, c'est-à-dire avec le bassin devant l'utilisateur ;
- bien qu'ici le membre inférieur comprenne un motoréducteur et une poulie effectuant la traction sur un câble, l'invention s'applique également à d'autres moyens de variation de la distance séparant les extrémités du segment de jambe comme par exemple actionneur de type SPC (« Super Coiled Polymer », actionneur à polymère super enroulé) dans lequel la variation de la longueur du câble est obtenue par chauffage de ce dernier en appliquant une tension électrique à ses bornes ;
- bien qu'ici le membre inférieur comprenne un capteur de déplacement potentiométrique de déplacement du chariot, l'invention s'applique également à d'autres types de capteur d'accroupissement comme par exemple un capteur inductif, capacitif ou optique de déplacement d'un chariot, ou, dans le cas d'un membre inférieur d'exosquelette dépourvu de chariot, un centrale inertielle ;
- bien qu'ici le segment de pied soit confondu avec la semelle de la chaussure de l'utilisateur, l'invention s'applique également à d'autres configurations du segment de pied du robot comme par exemple une plateforme rapporté par sanglage, collage, vissage sur le pied (ou la chaussure) de l'utilisateur ;
- bien qu'ici le rattrapage de mou du câble comprenne un capteur de couple positionné sur la sortie du motoréducteur, l'invention s'applique également à un rattrapage de mou de câble comprenant un capteur de mou de câble effectuant une mesure de mou de câble directement sur le câble ;
- bien qu'ici le potentiomètre soit un potentiomètre rotatif résistif, l'invention s'applique également à d'autres types de capteurs de position de pied comme par exemple un potentiomètre linéaire, un capteur inductif, à ultrasons ou capacitif.

La lame ressort peut être articulée sur le segment de pied et/ou le segment de bassin en des points identiques ou différents des points d'articulation du segment de jambe sur le segment de pied et/ou de hanche.

Avantageusement, le câble 44 peut être doublé par un deuxième câble actif ou non (c'est-à-dire reprenant ou non une partie de la tension du câble 44) qui contribue à la sureté de fonctionnement et prévient des conséquences d'une rupture accidentelle du câble 44.

Toutes les articulations des segments de l'exosquelette n'ont pas été décrites et peuvent être adaptées à l'utilisation spécifique de l'exosquelette. Par exemple, les flexions de hanche pourront être, soit actionnées, soit laissées libres, ou encore couplées, selon les cas.

De même, les articulations d'abduction de hanche pourront être, selon les cas, actionnées, laissées libres, ou contraintes (butée bilatérale ou unilatérale, avec ou sans ressort). Il en est de même pour les articulations des chevilles.

## Revendications

1. Membre inférieur (1) d'exosquelette ambulatoire comprenant au moins un segment de bassin (10), un segment de jambe (20) et un segment de pied (30), le segment de jambe (20) étant articulé en sa première extrémité (21) sur le segment de bassin (10) et en sa deuxième extrémité (24) sur le segment de pied (30), dans lequel le segment de jambe (20) comprend des moyens (40, 44) de variation de la distance (d) séparant les extrémités (21,24) du segment de jambe (20) pour appliquer un effort opposé à celui de l'élément ressort (25), les moyens (40, 44) de variation de la distance (d) étant portés par le segment de bassin (10),
dans lequel les moyens (40, 44) de variation de la distance (d) comprennent un dispositif de précontrainte (11, 12, 46) de l'élément ressort (25), **caractérisé en ce que** le segment de jambe comprend un élément ressort pour exercer un effort qui s'oppose à un rapprochement des extrémités du segment de jambe.

2. Membre inférieur (1) d'exosquelette ambulatoire selon la revendication 1, dans lequel les moyens (40, 44) de variation de la distance (d) comprennent un câble (44) .

3. Membre inférieur (1) d'exosquelette ambulatoire selon la revendication 2, dans lequel le câble (44) est attelé à un point d'articulation du segment de jambe (20) sur le segment de pied (30), ou sur un point du segment de jambe (20).

4. Membre inférieur (1) d'exosquelette ambulatoire selon la revendication 2, dans lequel le câble (44) s'étend entre le segment de bassin (10) et le segment de pied (30)

5. Membre inférieur (1) d'exosquelette ambulatoire selon l'une des revendications 2 à 4, dans lequel les moyens (40, 44) de variation de la distance (d) comprennent un motoréducteur (40) et une poulie enrouleuse (43) pour enrouler et dérouler le câble (44).

6. Membre inférieur (1) d'exosquelette ambulatoire selon l'une des revendications précédentes, dans lequel les moyens de variation de la distance (d) comprennent un premier chariot (71, 74) coulissant relativement au segment de bassin (10).

7. Membre inférieur (1) d'exosquelette ambulatoire selon la revendication 6, comprenant un actionneur (75) de déplacement du premier chariot (74) relativement au segment de bassin (10).

8. Membre inférieur (1) d'exosquelette ambulatoire selon l'une des revendications précédentes, dans lequel les moyens (40, 44) de variation de la distance (d) sont pilotés par un capteur de position de pied (34, 38, 62) solidaire du segment de pied (30).

9. Membre inférieur (1) d'exosquelette ambulatoire selon la revendication 8, dans lequel le capteur de position de pied (34,38, 62) comprend un potentiomètre fonctionnellement relié au segment de jambe.

10. Membre inférieur (1) d'exosquelette ambulatoire selon l'une des revendications précédentes, dans lequel l'élément ressort (25) est une lame (25).

11. Membre inférieur (1) d'exosquelette ambulatoire selon la revendication 10 dans lequel la lame ressort (25) est positionnée derrière la jambe (22) d'un utilisateur lorsqu'il porte l'exosquelette.

12. Membre inférieur (1) d'exosquelette ambulatoire selon la revendication 10 dans lequel la lame ressort (25) est positionnée devant la jambe (22) d'un utilisateur lorsqu'il porte l'exosquelette.

13. Membre inférieur (1) d'exosquelette ambulatoire selon la revendication 2, comprenant des moyens de rattrapage de mou du câble (44).

14. Membre inférieur (1) d'exosquelette ambulatoire selon la revendication 1, comprenant un capteur d'accroupissement (77).

15. Membre inférieur (1) d'exosquelette ambulatoire selon l'une des revendications précédentes dans lequel le segment de pied comprend une semelle de chaussure destinée à recevoir le pied (130) d'un utilisateur (100).

## Patentansprüche

1. Untere Gliedmaße (1) eines ambulanten Exoskeletts, umfassend mindestens ein Beckensegment (10), ein Beinsegment (20) und ein Fußsegment (30), wobei das Beinsegment (20) an seinem ersten Ende (21) an dem Beckensegment (10) und an seinem zweiten Ende (24) an dem Fußsegment (30) angelenkt ist, wobei das Beinsegment (20) Mittel (40, 44) zum Verändern des die Enden (21, 24) des Beinsegments (20) trennenden Abstands (d) umfasst, um eine Kraft aufzubringen, die zu der des Federelements (25) entgegengesetzt ist, wobei die Mittel (40, 44) zum Verändern des Abstands (d) von dem Beckensegment (10) getragen werden,
wobei die Mittel (40, 44) zum Verändern des Abstands (d) eine Vorspannvorrichtung (11, 12, 46) zum Vorspannen des Federelements (25) umfassen, **dadurch gekennzeichnet, dass** das Beinsegment ein Federelement umfasst, um eine Kraft auszuüben, die sich einem Annähern der Enden des Beinsegments widersetzt.

2. Untere Gliedmaße (1) eines ambulanten Exoskeletts nach Anspruch 1, bei dem die Mittel (40, 44) zum Verändern des Abstands (d) ein Kabel (44) umfassen.

3. Untere Gliedmaße (1) eines ambulanten Exoskeletts nach Anspruch 2, bei dem das Kabel (44) an einen Gelenkverbindungspunkt des Beinsegments (20) am Fußsegment (30) gekoppelt ist, oder an einen Punkt des Beinsegments (20).

4. Untere Gliedmaße (1) eines ambulanten Exoskeletts nach Anspruch 2, bei dem das Kabel (44) zwischen dem Beckensegment (10) und dem Fußsegment (30) verläuft.

5. Untere Gliedmaße (1) eines ambulanten Exoskeletts nach einem der Ansprüche 2 bis 4, bei dem die Mittel (40, 44) zum Verändern des Abstands (d) einen Getriebemotor (40) und eine Wickelrolle (43) zum Auf- und Abwickeln des Kabels (44) umfassen.

6. Untere Gliedmaße (1) eines ambulante Exoskeletts nach einem der vorhergehenden Ansprüche, bei dem die Mittel zum Verändern des Abstands (d) einen ersten Schlitten (71, 74) umfassen, der relativ zum Beckensegment (10) gleitet.

7. Untere Gliedmaße (1) eines ambulanten Exoskeletts nach Anspruch 6, umfassend einen Aktor (75) zum Verschieben des ersten Schlittens (74) relativ zum Beckensegment (10).

8. Untere Gliedmaße (1) eines ambulanten Exoskeletts nach einem der vorhergehenden Ansprüche, bei dem die Mittel (40, 44) zum Verändern des Abstands (d) von einem Fußpositionssensor (34, 38, 62) gesteuert werden, der fest mit dem Fußsegment (30) verbunden ist.

9. Untere Gliedmaße (1) eines ambulanten Exoskeletts nach Anspruch 8, bei dem der Fußpositionssensor (34, 38, 62) ein Potentiometer umfasst, das funktional mit dem Beinsegment verbunden ist.

10. Untere Gliedmaße (1) eines ambulanten Exoskeletts nach einem der vorhergehenden Ansprüche, bei dem das Federelement (25) eine Blattfeder (25) ist.

11. Untere Gliedmaße (1) eines ambulanten Exoskeletts nach Anspruch 10, bei dem die Blattfeder (25) hinter dem Bein (22) eines Nutzers positioniert ist, wenn er das Exoskelett trägt.

12. Untere Gliedmaße (1) eines ambulanten Exoskeletts nach Anspruch 10, bei dem die Blattfeder (25) vor dem Bein (22) eines Benutzers positioniert ist, wenn er das Exoskelett trägt.

13. Untere Gliedmaße (1) eines ambulanten Exoskeletts nach Anspruch 2, umfassend Mittel zum Ausgleich eines Durchhangs des Kabels (44).

14. Untere Gliedmaße (1) eines ambulanten Exoskeletts nach Anspruch 1, umfassend einen Hockstellungssensor (77).

15. Untere Gliedmaße (1) eines ambulanten Exoskeletts nach einem der vorhergehenden Ansprüche, bei dem das Fußsegment eine Schuhsohle umfasst, die dazu bestimmt ist, den Fuß (130) eines Nutzers (100) aufzunehmen.

## Claims

1. A lower limb (1) of an ambulatory exoskeleton, comprising at least a pelvis segment (10), a leg segment (20) and a foot segment (30), the leg segment (20) being articulated at its first end (21) on the pelvis segment (10) and at its second end (24) on the foot segment (30), in which the leg segment (20) comprises and means (40, 44) for varying the distance (d) separating the ends (21, 24) of the leg segment (20) in order to apply a force counter to that of the spring element (25), the means (40, 44) for varying the distance (d) being carried by the pelvis segment (10),
in which the means (40, 44) for varying the distance (d) comprise a device (11, 12, 46) for pretensioning the spring element (25),
**characterized in that** the leg segment (20) comprises a spring element (25) for exerting a force that opposes a movement of the ends of the leg segment toward each other,.

2. The lower limb (1) of an ambulatory exoskeleton as claimed in claim 1, in which the means (40, 44) for varying the distance (d) comprise a cable (44).

3. The lower limb (1) of an ambulatory exoskeleton as claimed in claim 2, in which the cable (44) is coupled to a point of articulation of the leg segment (20) on the foot segment (30), or on a point of the leg segment (20).

4. The lower limb (1) of an ambulatory exoskeleton as claimed in claim 2, in which the cable (44) extends between the pelvis segment (10) and the foot segment (30) .

5. The lower limb (1) of an ambulatory exoskeleton as claimed in one of claims 2 through 4, in which the means (40, 44) for varying the distance (d) comprise a geared motor (40) and a winding pulley (43) for winding and unwinding the cable (44).

6. The lower limb (1) of an ambulatory exoskeleton as claimed in one of the preceding claims, in which the means for varying the distance (d) comprise a first carriage (71, 74) sliding relative to the pelvis segment (10) .

7. The lower limb (1) of an ambulatory exoskeleton as claimed in claim 6, comprising an actuator (75) for moving the first carriage (74) relative to the pelvis segment (10).

8. The lower limb (1) of an ambulatory exoskeleton as claimed in one of the preceding claims, in which the means (40, 44) for varying the distance (d) are controlled by a foot position sensor (34, 38, 62) rigidly connected to the foot segment (30).

9. The lower limb (1) of an ambulatory exoskeleton as claimed in claim 8, in which the foot position sensor (34, 38, 62) comprises a potentiometer functionally connected to the leg segment.

10. The lower limb (1) of an ambulatory exoskeleton as claimed in one of the preceding claims, in which the spring element (25) is a leaf spring (25).

11. The lower limb (1) of an ambulatory exoskeleton as claimed in claim 10, in which the leaf spring (25) is positioned behind the leg (22) of a user wearing the exoskeleton.

12. The lower limb (1) of an ambulatory exoskeleton as claimed in claim 10, in which the leaf spring (25) is positioned in front of the leg (22) of a user wearing the exoskeleton.

13. The lower limb (1) of an ambulatory exoskeleton as claimed in claim 2, comprising means for taking up the slack in the cable (44).

14. The lower limb (1) of an ambulatory exoskeleton as claimed in claim 1, comprising a crouch sensor (77).

15. The lower limb (1) of an ambulatory exoskeleton as claimed in one of the preceding claims, in which the foot segment comprises a shoe sole intended to receive the foot (130) of a user (100).
